# EUROPÄISCHE PATENTSCHRIFT

(11) **EP 1 787 481 B1**
(45) Veröffentlichungstag und Bekanntmachung des Hinweises auf die Patenterteilung: **27.05.2009**
(21) Anmeldenummer: 05776552.1
(22) Anmeldetag: 30.08.2005
(51) Int. Cl.: H04Q 1/14, H01R 13/73

(54) **ANSCHLUSSMODUL FÜR DIE TELEKOMMUNIKATIONS- UND DATENTECHNIK**
CONNECTING MODULE TO BE USED IN TELECOMMUNICATION AND DATA TECHNOLOGY
MODULE DE CONNEXION UTILISE DANS LE DOMAINE DES TELECOMMUNICATIONS ET DE L'INFORMATIQUE

(30) Priorität: 10.09.2004 DE 102004043764
(43) Veröffentlichungstag der Anmeldung: 23.05.2007
(73) Patentinhaber: ADC GMBH, 14167 Berlin (DE)
(72) Erfinder: NEUMETZLER, Heiko, 12623 Berlin (DE); KLEIN, Harald, 10318 Berlin (DE); OLTMANNS, Johann, 12169 Berlin (DE); NIJHUIS, Antony, 64397 Modautal-Brandau (DE)
(86) Internationale Anmeldenummer: PCT/EP2005/009317
(87) Internationale Veröffentlichungsnummer: WO 2006/027143

(56) Entgegenhaltungen:
- EP-A- 0 300 065
- DE-A1- 10 236 361
- DE-A1- 19 803 420
- US-A- 5 127 851

## Beschreibung

Die Erfindung betrifft ein Anschlussmodul für die Telekommunikations- und Datentechnik gemäß dem Oberbegriff des Anspruchs 1.

Aus der EP 0 304 393 B1 ist eine Vorrichtung zur Halterung von Anschlussleisten der Fernmeldetechnik bekannt, bestehend aus einem Montagegestell, mindestens einer auf diesem angeordneten Anschlussleiste und mindestens einem Verbindungselement, wobei das Montagegestell aus mindestens einer in einem Gestellteil gelagerten Rundstange gebildet ist und die Anschlussleiste als Verbindungselement ein bogenförmiges Schnappelement aufweist, das auf die Rundstange aufrastbar und auf der Rundstange verschiebbar ist. Vorzugsweise weist dabei die Anschlussleiste zwei derartige Verbindungselemente auf, die dann jeweils auf eine Rundstange gerastet werden. Weiter vorzugsweise umschließen die bogenförmigen Ansätze der Anschlussleiste die Rundstange in einem Winkel von mehr als 180°. Die Anschlussleiste besteht aus einem Ober- und Unterteil, wobei die beiden bogenförmigen Ansätze einstückig an dem Gehäuseunterteil angeformt sind. Die in dem Oberteil eingesetzten Kontakte sind vorzugsweise als Schneid-Klemm-Kontakte ausgebildet.

Aus der WO 01/97339 A1 ist ein Verteileranschlussmodul für die Telekommunikations- und Datentechnik bekannt, umfassend ein Gehäuse, in dem von außen zugänglich Eingangs- und Ausgangskontakte zum Anschließen von Leitungen und Adern angeordnet sind, wobei das Gehäuse mit einem Hohlraum ausgebildet ist, in dem Funktionselemente zwischen den Eingangs- und Ausgangkontakten angeordnet sind. Dabei sind die Funktionselemente auf mindestens einer Leiterplatte angeordnet, die in dem Gehäuse abgestützt ist. Weiter wird eine Ausführungsform offenbart, bei der die Eingangs- und Ausgangskontakte an gegenüberliegenden Stirnseiten des Gehäuses angeordnet sind. Masseleitungen auf der Leiterplatte sind durch mindestens einen ring- oder gabelförmigen Kontakt nach außen zugänglich ausgebildet, wobei die ring- oder gabelförmigen Kontakte mit Rundstangen elektrisch und mechanisch verbindbar sind.

Neben den beschriebenen Rundstangen sind auch weitere Querschnittsformen wie beispielsweise hexagonal, oval oder auch quadratisch bzw. rechteckförmig möglich, wobei bei letzteren ein Verschwenken nicht mehr möglich ist.

Aus der EP 0 300 065 A1 ist ein Montagefuß zum Befestigen von elektrischen oder elektronischen Bauelementen auf Tragschienen bekannt, mit einem Rastfederbein zum Verrasten auf einem der Tragschienenschenkel und einer auf die Rückseite des verrasteten Rastfederbeines wirkenden Verriegelung, wobei die Verriegelung durch eine in eine Blockierstellung hinter das verrastete Rastfederbein schwenkbar an dem Montagefuß angeformte Verriegelungsstrebe gebildet ist. Dabei ist auf der Rückseite des Rastfederbeines eine Rastaufnahme für eine Endkante der Verriegelungsstrebe vorgesehen, wobei die Verriegelungsstrebe mittels eines Filmscharniers an dem Montagefuß angelenkt ist.

Aus der DE 102 36 361 A1 ist ein Verteileranschlussmodul für die Telekommunikations- und Datentechnik bekannt, umfassend ein Gehäuse, in dem von außen zugänglich Eingangs- und Ausgangskontakte zum Anschließen von Leitungen und Adern angeordnet sind, wobei das Gehäuse mit einem Hohlraum ausgebildet ist, in dem mindestens eine Leiterplatte angeordnet ist, wobei die Eingangs- und Ausgangskontakte an den gegenüberliegenden Stirnseiten des Gehäuses angeordnet sind, wobei die Eingangskontakte einer Eingangsseite und die Ausgangskontakte einer Ausgangsseite zugeordnet sind, wobei die Eingangskontakte als mindestens zwei einander gegenüberliegende Reihen von Kontakten ausgebildet sind und die Ausgangskontakte als mindestens ein Steckverbinder ausgebildet sind, wobei mindestens zwei Eingangskontakte der ersten Reihe und mindestens zwei Eingangskontakte der zweiten Reihe mit den Ausgangskontakten des mindestens einen Steckverbinders verbunden sind, wobei die Eingangskontakte der ersten und zweiten Reihe über die mindestens eine Leiterplatte mit den Ausgangskontakten des Steckverbinders verbunden sind.

Dabei weisen die gegenüberliegenden Stirnseiten des Gehäuses eine unterschiedliche Breite auf, wobei ein Befestigungsteil für ein Montagegestell seitlich an der schmalen Stirnseite des Gehäuses angeordnet ist.

Aus der DE 198 03 420 A1 sowie der US-5,127,851 sind weitere Anschlussmodule für die Telekommunikations- und Datentechnik bekannt, wo teilweise Kontakte an gegenüberliegenden Stirnseiten des Gehäuses angeordnet sind.

Der Erfindung liegt das technische Problem zugrunde, ein Anschlussmodul für die Telekommunikations- und Datentechnik zu schaffen, mittels derer eine bessere Verbindung zwischen Anschlussmodul und Montagegestell erreicht wird.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu ist das Befestigungselement mindestens zweiteilig mit einem ersten und zweiten Befestigungsteil ausgebildet, wobei mittels des ersten Befestigungsteils das Anschlussmodul auf das Montagegestell aufsteckbar ist und mittels des zweiten Befestigungsteils an dem Montagegestell verriegelbar ist. Der Erfindung liegt dabei die Erkenntnis zugrunde, dass bei bestimmten Voraussetzungen ein einfaches Aufschnappen oder Aufrasten keine ausreichende Sicherheit für die Befestigung gewährleistet. Beispielsweise bei Arbeiten an der Rückseite des Montagegestells kann es dazu kommen, dass versehentlich die Anschlussmodule vom Montagegestell gedrückt werden. Dieses Problem verschärft sich, wenn an der Stirnseite der Rückseite Kontakte vorhanden sind, weil dann durch einen Steck- oder Beschaltungsvorgang Kräfte auf das Anschlussmodul wirken, die das Anschlussmodul vom Montagegestell schieben. Dies wird nun durch das zweite Befestigungsteil verhindert. Dabei kann das erste Befestigungsteil bereits eine gewisse Rastverbindung zum Montagegestell herstellen, was aber nicht notwendigerweise der Fall ist. Weiter umfassen das erste und zweite Befestigungsteil das Montagegestell vollständig im Umfang. Das Befestigungselement ist zum Befestigen an einer Rundstange ausgebildet, wobei das erste Befestigungsteil bogenförmig ausgebildet ist, zumindest aber mit bogenförmigen Teilstücken ausgebildet ist. Hierdurch kann das Anschlussmodul nach Lösung der Verriegelung weiter auf dem Montagegestell verschoben und/oder verschwenkt werden.

In einer bevorzugten Ausführungsform ist das zweite Befestigungsteil am ersten Befestigungsteil und/oder am Anschlussmodul angelenkt. Hierdurch ist das zweite Befestigungsteil verliersicher am Anschlussmodul. Prinzipiell sind aber Ausführungsformen denkbar, wo das zweite Befestigungsteil als separates Teil beispielsweise auf das erste Befestigungsteil aufgerastet wird, um dann eine geschlossene Kontur zu bilden.

In einer weiteren bevorzugten Ausführungsform ist das zweite Befestigungsteil an der einen Seite am ersten Befestigungsteil und/oder am Anschlussmodul angelenkt und an der anderen Seite mit dem ersten Befestigungsteil und/oder dem Anschlussmodul verrastbar, wobei weiter vorzugsweise die Rastverbindung zerstörungsfrei lösbar ist. Hierdurch wird eine sehr einfache und stabile Verbindung erreicht. Hierzu wird das Anschlussmodul mit aufgeschwenktem zweitem Befestigungsteil auf das Montagegestell gesteckt und anschließend das zweite Befestigungsteil zugeklappt und verrastet. Soll dann das Anschlussmodul ausgewechselt oder auf dem Montagegestell verschoben oder verschwenkt werden, so wird einfach die Rastverbindung gelöst.

In einer weiteren bevorzugten Ausführungsform sind die Kontakte auf sich gegenüberliegenden Stirnseiten des Gehäuses angeordnet.

In einer weiteren bevorzugten Ausführungsform weisen dabei die gegenüberliegenden Stirnseiten eine unterschiedliche Breite auf, wobei das erste Befestigungsteil seitlich an der schmaleren Stirnseite angeordnet ist.

In einer weiteren bevorzugten Ausführungsform sind die Kontakte der einen Stirnseite mindestens teilweise elektrisch mit den Kontakten der anderen Stirnseite verbunden.

Vorzugsweise ist in dem Gehäuse mindestens eine Leiterplatte angeordnet, wobei mindestens einzelne Kontakte über die Leiterplatte elektrisch verbunden sind.

Weiter vorzugsweise sind auf der elektrischen Leiterplatte Filterbaugruppen, Schutzelemente und/oder Verstärkerschaltungen angeordnet. Die Filterbaugruppen können dabei beispielsweise zur Signaltrennung bei XDSL-Anwendungen, zur Rauschunterdrückung und/oder zur Impedanzanpassung ausgebildet sein. Die Schutzelemente sind beispielsweise als Überspannungsschutzelemente ausgebildet, wobei hierzu im Detail beispielsweise auf die WO 01/97339 A1 verwiesen wird.

Vorzugsweise sind mindestens ein Teil der Kontakte als Schneid-Klemm-Kontakte ausgebildet. Weiter vorzugsweise sind die Kontakte auf der schmaleren Stirnseite als Schneid-Klemm-Kontakte ausgebildet. Die Schneid-Klemm-Kontakte sind dabei weiter vorzugsweise in einer Anschlussleiste angeordnet, die mit dem Gehäuse verrastbar ist. Dabei sind weiter vorzugsweise die Schneid-Klemm-Kontakte an den hinteren Enden mit Gabelkontakten ausgebildet, über die der elektrische Kontakt zur Leiterplatte hergestellt wird.

Weiter vorzugsweise sind die Kontakte auf der hinteren Stirnseite als Koaxial-Steckverbinder ausgebildet. Aber auch andere Steckverbinder wie beispielsweise RJ 45-Steckverbinder oder auch Schneid-Klemm-Kontakte sind einsetzbar.

In einer weiteren bevorzugten Ausführungsform umfasst das Anschlussmodul zusätzlich Trennkontakte, mittels derer die elektrische Verbindung zwischen zwei Kontakten auftrennbar ist. Die Trennkontakte sind dabei vorzugsweise von der Stirnseite mit den Schneid-Klemm-Kontakten zugänglich, soweit Schneid-Klemm-Kontakte vorhanden sind.

Die Erfindung wird nachfolgend anhand eines bevorzugten Ausführungsbeispiels näher erläutert. Die Fig. zeigen:
- Fig. 1: ein Anschlussmodul in einer perspektivischen Rückansicht,
- Fig. 2: das Anschlussmodul in einer perspektivischen Vorderansicht,
- Fig. 3: mehrere Anschlussmodule in einer perspektivischen Vorderansicht in einem Montagegestell mit Rundstangen und
- Fig. 4: eine perspektivische Rückansicht der Anschlussmodule.

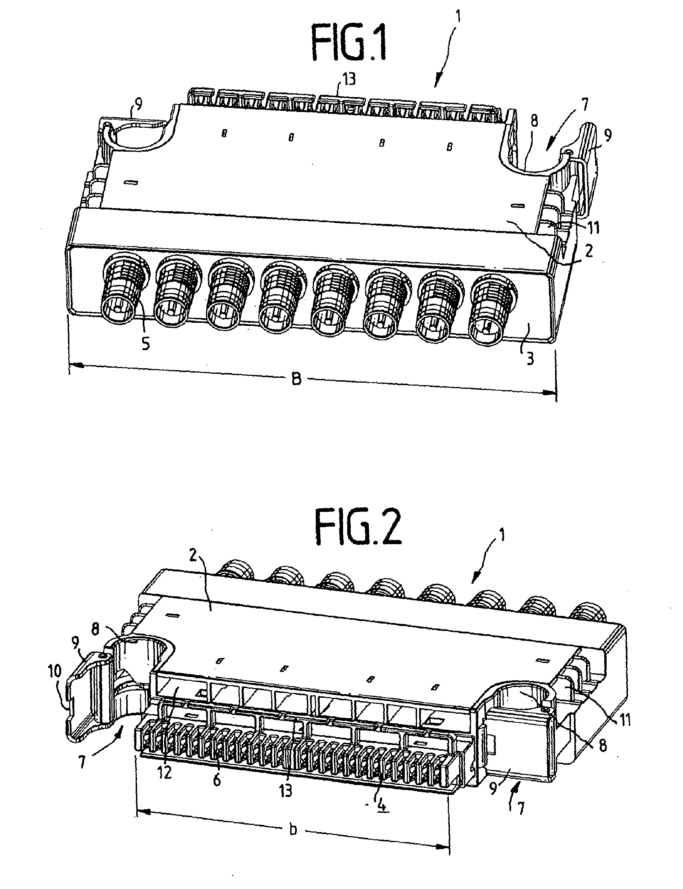

Das Anschlussmodul 1 umfasst ein Gehäuse 2 mit einer ersten Stirnseite 3 der Breite B und einer gegenüberliegenden Stirnseite 4 der Breite b, wobei gilt B > b. An der Stirnseite 3 sind acht Koaxial-Steckverbinder 5 angeordnet und an der Stirnseite 4 sechzehn Schneid-Klemm-Kontakte 6 zum Abschließen von acht Doppeladern. Die Schneid-Klemm-Kontakte 6 sind über eine im Gehäuse 2 angeordnete Leiterplatte mit den Koaxial-Steckverbindern 5 elektrisch über Filterbaugruppen zur Impedanzanpassung verbunden. Neben der Stirnseite 4 etwas zurückgesetzt sind zwei Befestigungselemente 7 angeordnet. Wie man in Fig. 2 sieht, ist das linke Befestigungselement 7 in einer offenen Position und das rechte Befestigungselement 7 in einer geschlossenen Position dargestellt. Das Befestigungselement 7 ist zweiteilig ausgebildet, wobei ein erstes Befestigungsteil 8 bogenförmig ausgebildet ist und aus dem Gehäuse 2 ausgeformt ist. Im dargestellten Beispiel ist also das erste Befestigungsteil 8 ein Bestandteil des Gehäuses 2. Das zweite Befestigungsteil 9 ist an den äußeren Rändern des ersten Befestigungsteils 8 schwenkbar angelenkt. Das zweite Befestigungsteil 9 ist dabei mit mindestens einem Rastelement 10 ausgebildet, das an der anderen Seite des ersten Befestigungsteils 8 lösbar einrasten kann. Des Weiteren sind seitlich (ein- oder beidseitig) sowie auf der Oberseite des Gehäuses 2 Drahtführungen 11, 12 für die Doppeladern angeordnet. Ebenso sind an der die Schneid-Klemm-Kontakte 6 tragenden Anschlussleiste Drahtführungen 13 angeordnet. Ebenso ist es zum Anschließen von geschirmten Adern möglich, statt sechzehn vierundzwanzig bzw. fünfundzwanzig Schneid-Klemm-Kontakte 6 zu verwenden. Des Weiteren sei angemerkt, dass in das Befestigungsteil 8 ein Endkontakt zur Herstellung einer Masseverbindung angeordnet sein kann.

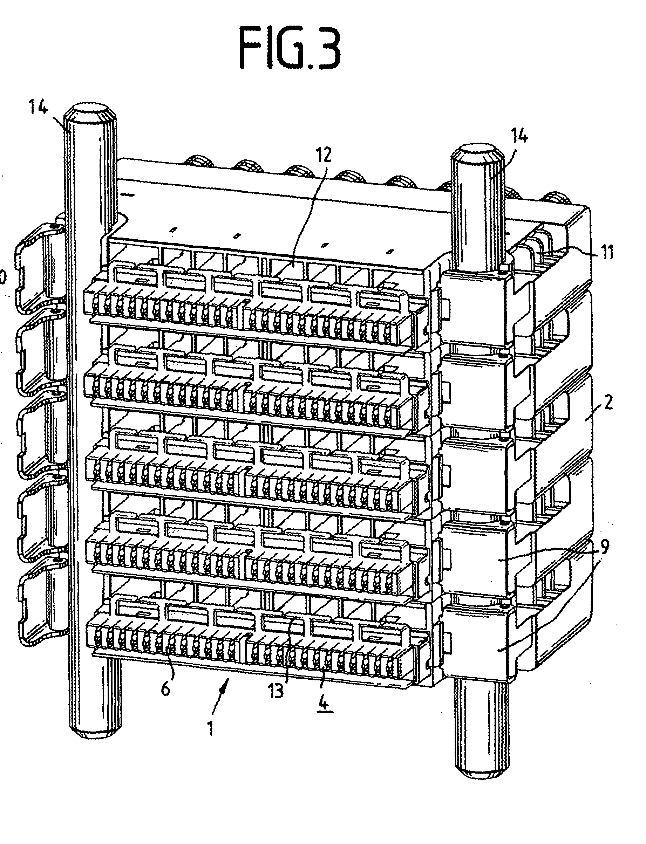

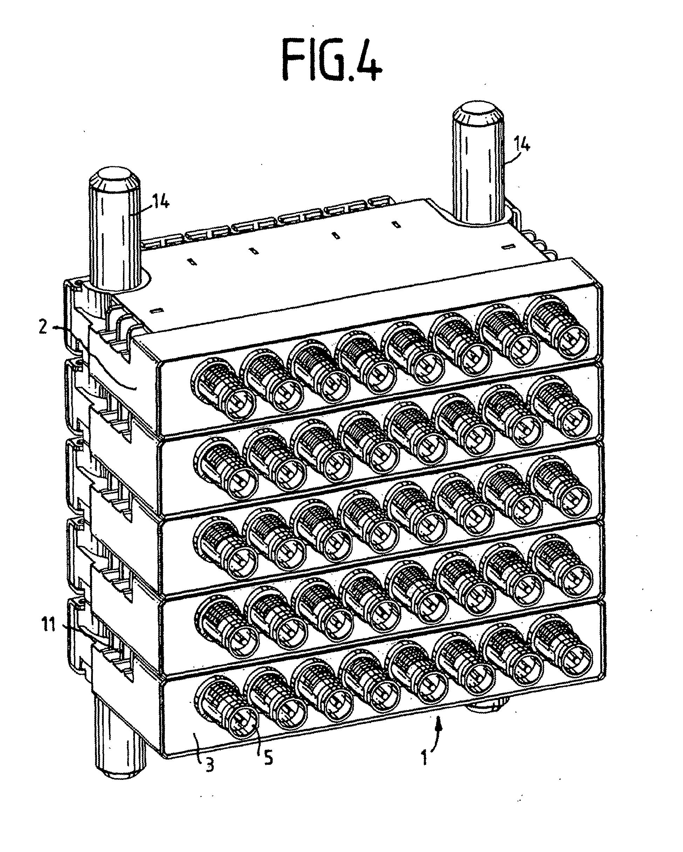

Anhand der Fig. 3 und 4 soll nun die Funktionsweise des Anschlussmoduls 1 näher erläutert werden. Wie man den Fig. 3 und 4 entnehmen kann, sind dabei jeweils fünf Anschlussmodule 1 auf zwei Rundstangen 14 als Teil eines Montagegestells dargestellt. Dabei ist die Stirnseite 3 mit Koaxial-Steckverbindem 5 meist die Systemseite und die Stirnseite 4 mit den Schneid-Klemm-Kontakten 6 die Rangierseite. Auf der Systemseite wird in Regelfall eine erfolgte Beschaltung kaum mehr geändert, wohingegen auf der Rangierseite häufiger die Verdrahtung geändert werden muss. Entsprechend wird ein Anschlussmodul 1 auf einem Montagegestell derart befestigt, dass die Rangierseite von der Vorderseite des Montagegestells zugänglich ist, an der im Regelfall mehr Platz für Rangierarbeiten ist. Im vorliegenden Beispiel werden also die Anschlussmodule 1 von der Rückseite des Montagegestells auf die Rundstangen 14 geschoben und anschließend durch Zuklappen und Verrasten der zweiten Befestigungsteile 9 auf den Rundstangen 14 verriegelt. Die Stärke der Verriegelung kann dabei entweder so gewählt werden, dass die Anschlussleiste auf den Rundstangen 14 fixiert ist oder aber derart gewählt werden, dass die Anschlussmodule 1 noch in Längsrichtung der Rundstangen 14 verschiebbar sind. Wie man am Besten in Fig. 3 erkennen kann, würde ohne die zweiten Befestigungsteile 9 beim Anschalten von Adern an die Schneid-Klemm-Kontakte 6 die Gefahr bestehen, dass die Anschaltkräfte das Anschlussmodul 1 von den Rundstangen 14 drücken würden.

### Bezugszeichenliste

- 1: Anschlussmodul
- 2: Gehäuse
- 3: erste Stirnseite
- B: Breite der ersten Stirnseite
- 4: gegenüberliegende Stirnseite
- b: Breite der gegenüberliegenden Stirnseite
- 5: Koaxial-Steckverbinder
- 6: Schneid-Klemm-Kontakte
- 7: Befestigungselement
- 8: Befestigungsteil
- 9: Befestigungsteil
- 10: Rastelement
- 11: Drahtführung
- 12: Drahtführung
- 13: Drahtführung
- 14: Rundstangen

## Patentansprüche

1. Anschlussmodul (1) für die Telekommunikations- und Datentechnik, umfassend ein Gehäuse (2), elektrische Kontakte (5, 6) zum Anschließen von Adern und/oder Kabeln und mindestens ein Befestigungselement (7), wobei mittels des Befestigungselementes (7) das Anschlussmodul (1) an einem Montagegestell befestigt werden kann, das Befestigungselement (7) mindestens zweiteilig mit einem ersten Befestigungsteil (8) und einem zweiten Befestigungsteil (9) ausgebildet ist, wobei mittels des ersten Befestigungsteils (8) das Anschlussmodul (1) auf das Montagegestell aufsteckbar ist und mittels dessen zweiten Befestigungsteils (9) an dem Montagegestell verriegelbar ist, wobei das erste und zweite Befestigungsteil (8, 9) das Montagegestell vollständig im Umfang umfassen und das Befestigungselement (7) zum Befestigen an einer Rundstange (14) ausgebildet ist, wobei das erste Befestigungsteil (8) bogenförmig ausgebildet ist.

2. Anschlussmodul nach Anspruch 1, **dadurch gekennzeichnet, dass** das zweite Befestigungsteil (9) am ersten Befestigungsteil (8) und/oder am Anschlussmodul (1) angelenkt ist.

3. Anschlussmodul nach einem der vorangegangenen Ansprüche, **dadurch gekennzeichnet, dass** das zweite Befestigungsteil (9) an dem ersten Befestigungsteil (8) und/oder am Anschlussmodul (1) verrastbar ist.

4. Anschlussmodul nach einem der vorangegangenen Ansprüche, **dadurch gekennzeichnet, dass** die Kontakte an gegenüberliegenden Stirnseiten (3, 4) des Gehäuses (2) angeordnet sind.

5. Anschlussmodul nach Anspruch 4, **dadurch gekennzeichnet, dass** die gegenüberliegenden Stirnseiten (3, 4) eine unterschiedliche Breite (B, b) aufweisen, wobei das erste Befestigungsteil (8) seitlich an der schmaleren Stirnseite (4) angeordnet ist.

6. Anschlussmodul nach einem der Ansprüche 4 oder 5, **dadurch gekennzeichnet, dass** die Kontakte der einen Stirnseite mindestens teilweise elektrisch mit den Kontakten der anderen Stirnseite verbunden sind.

7. Anschlussmodul nach einem der vorangegangenen Ansprüche, **dadurch gekennzeichnet, dass** in dem Gehäuse (2) mindestens eine Leiterplatte angeordnet ist, wobei mindestens einzelne Kontakte über die Leiterplatte elektrisch verbunden sind.

8. Anschlussmodul nach Anspruch 7, **dadurch gekennzeichnet, dass** auf der elektrischen Leiterplatte Filterbaugruppen, Schutzelemente und/oder Verstärkerschaltungen angeordnet sind.

9. Anschlussmodul nach einem der vorangegangenen Ansprüche, **dadurch gekennzeichnet, dass** mindestens ein Teil der Kontakte als Schneid-Klemm-Kontakte (6) ausgebildet sind.

10. Anschlussmodul nach einem der Ansprüche 5 bis 9, **dadurch gekennzeichnet, dass** die Kontakte auf der schmaleren Stirnseite (4) als Schneid-Klemm-Kontakte (6) ausgebildet sind.

11. Anschlussmodul nach einem der Ansprüche 5 bis 10, **dadurch gekennzeichnet, dass** die Kontakte auf der breiteren Stirnseite (3) als Koaxial-Steckverbinder (5) ausgebildet sind.

12. Anschlussmodul nach einem der vorangegangenen Ansprüche, **dadurch gekennzeichnet, dass** das Anschlussmodul (1) zusätzlich mit Trennkontakten ausgebildet ist, mittels derer die elektrische Verbindung zwischen zwei Kontakten auftrennbar ist.

## Claims

1. Connection module (1) for telecommunications and data technology, comprising a housing (2), electrical contacts (5, 6) for connecting wires and/or cables and at least one fixing element (7), it being possible for the connection module (1) to be fixed on a mounting frame by means of the fixing element (7), the fixing element (7) being of at least two-part design having a first fixing part (8) and a second fixing part (9), it being possible for the connection module (1) to be plugged onto the mounting frame by means of the first fixing part (8) and to be latched onto the mounting frame by means of its second fixing part (9), the first and second fixing parts (8, 9) completely surrounding the mounting frame around its circumference, and the fixing element (7) being designed to be fixed on a round rod (14), the first fixing part (8) being arched.

2. Connection module according to Claim 1, **characterized in that** the second fixing part (9) is hinged on the first fixing part (8) and/or on the connection module (1).

3. Connection module according to one of the preceding claims, **characterized in that** the second fixing part (9) can be latched on the first fixing part (8) and/or on the connection module (1).

4. Connection module according to one of the preceding claims, **characterized in that** the contacts are arranged on opposing end faces (3, 4) of the housing (2).

5. Connection module according to Claim 4, **characterized in that** the opposing end faces (3, 4) have a different width (B, b), the first fixing part (8) being arranged laterally on the narrower end face (4).

6. Connection module according to either of Claims 4 or 5, **characterized in that** the contacts of one end face are at least partially electrically connected to the contacts of the other end face.

7. Connection module according to one of the preceding claims, **characterized in that** at least one printed circuit board is arranged in the housing (2), at least individual contacts being electrically connected via the printed circuit board.

8. Connection module according to Claim 7, **characterized in that** filter assemblies, protective elements and/or amplifier circuits are arranged on the electrical printed circuit board.

9. Connection module according to one of the preceding claims, **characterized in that** at least some of the contacts are in the form of insulation-piercing contacts (6).

10. Connection module according to one of Claims 5 to 9, **characterized in that** the contacts on the narrower end face (4) are in the form of insulation-piercing contacts (6).

11. Connection module according to one of Claims 5 to 10, **characterized in that** the contacts on the wider end face (3) are in the form of coaxial plug connectors (5).

12. Connection module according to one of the preceding claims, **characterized in that** the connection module (1) is also formed with isolating contacts, by means of which the electrical connection between two contacts can be broken.

## Revendications

1. Module de connexion (1) utilisé dans le domaine des télécommunications et de l'informatique, comprenant un boîtier (2), des contacts électriques (5, 6) pour connecter des fils et/ou des câbles et au moins un élément de fixation (7), le module de connexion (1) pouvant être fixé à un châssis de montage à l'aide de l'élément de fixation (7), l'élément de fixation (7) étant réalisé au moins en deux parties avec une première partie de fixation (8) et une deuxième partie de fixation (9), le module de connexion (1) pouvant être enfiché sur le châssis de montage à l'aide de la première partie de fixation (8) et pouvant être verrouillé au niveau du châssis de montage à l'aide de sa deuxième partie de fixation (9), les première et deuxième parties de fixation (8, 9) entourant entièrement le châssis de montage sur l'ensemble de sa périphérie et l'élément de fixation (7) étant réalisé de façon à être fixé à une tige ronde (14), la première partie de fixation (8) prenant une forme en arc.

2. Module de connexion selon la revendication 1, **caractérisé en ce que** la deuxième partie de fixation (9) est articulée au niveau de la première partie de fixation (8) et/ou au niveau du module de connexion (1).

3. Module de connexion selon l'une quelconque des revendications précédentes, **caractérisé en ce que** la deuxième partie de fixation (9) peut être encliquetée au niveau de la première partie de fixation (8) et/ou du module de connexion (1).

4. Module de connexion selon l'une quelconque des revendications précédentes, **caractérisé en ce que** les contacts sont disposés contre les faces avant (3, 4) opposées du boîtier (2).

5. Module de connexion selon la revendication 4, **caractérisé en ce que** les faces frontales (3, 4) opposées comportent une largeur (B, b) différente, la première partie de fixation (8) étant disposée en côté contre la face frontale (4) la plus étroite.

6. Module de connexion selon l'une quelconque des revendications 4 ou 5, **caractérisé en ce que** les contacts de la première face avant sont reliés au moins en partie électriquement aux contacts de l'autre face frontale.

7. Module de connexion selon l'une quelconque des revendications précédentes, **caractérisé en ce qu'**au moins une plaque conductrice est disposée dans le boîtier (2), les différents contacts étant au moins reliés électriquement via la plaque conductrice.

8. Module de connexion selon la revendication 7, **caractérisé en ce que** des groupes modulaires de filtrage, des éléments de protection et/ou des circuits amplificateurs sont disposés dans la plaque conductrice électrique.

9. Module de connexion selon l'une quelconque des revendications précédentes, **caractérisé en ce qu'**au moins une partie des contacts est réalisée sous la forme de contacts à borne guillotine (6).

10. Module de connexion selon l'une quelconque des revendications 5 à 9, **caractérisé en ce que** les contacts sont réalisés sur la face frontale (4) la plus étroite sous la forme de contacts à borne guillotine (6).

11. Module de connexion selon l'une quelconque des revendications 5 à 10, **caractérisé en ce que** les contacts sont réalisés sur la face frontale (3) la plus large sous la forme de contacts enfichables (5) coaxiaux.

12. Module de connexion selon l'une quelconque des revendications précédentes, **caractérisé en ce que** le module de connexion (1) est en outre réalisé à l'aide de contacts isolants à l'aide desquels la connexion électrique peut être coupée entre deux contacts.
